Europäisches Patentamt

European Patent Office

Office européen des brevets

(19)

(11) EP 0 671 049 B1

## (12) FASCICULE DE BREVET EUROPEEN

(45) Date de publication et mention
de la délivrance du brevet:
**17.03.1999 Bulletin 1999/11**

(21) Numéro de dépôt: **94900874.2**

(22) Date de dépôt: **24.11.1993**

(51) Int Cl.[6]: **H01F 10/08**, H01Q 17/00,
H01P 1/32

(86) Numéro de dépôt international:
**PCT/FR93/01159**

(87) Numéro de publication internationale:
**WO 94/12992 (09.06.1994 Gazette 1994/13)**

### (54) COMPOSITE HYPERFREQUENCE ANISOTROPE

ANISOTROPE VERBUNDSTOFF FÜR HYPERFREQUENZEN

ANISOTROPIC MICROWAVE COMPOSITE

(84) Etats contractants désignés:
**DE FR GB IT NL**

(30) Priorité: **25.11.1992 FR 9214182**

(43) Date de publication de la demande:
**13.09.1995 Bulletin 1995/37**

(73) Titulaire: **COMMISSARIAT A L'ENERGIE
ATOMIQUE
75752 Paris Cédex 15 (FR)**

(72) Inventeurs:
• **ACHER, Olivier, 16, résidence Petit-Chambord
F-92340 Bourg-la-Reine (FR)**
• **VERMEULEN, Jean-Luc
F-93110 Rosny-sous-Bois (FR)**
• **FONTAINE, Jean-Marie
F-91470 Limours (FR)**

(74) Mandataire: **Signore, Robert et al
c/o BREVATOME
25, rue de Ponthieu
75008 Paris (FR)**

(56) Documents cités:
EP-A- 0 468 887          US-A- 2 610 250
US-A- 3 540 047

• **PATENT ABSTRACTS OF JAPAN vol. 8, no. 239
(E-276)2 Novembre 1984 & JP,A,59 119 712
(SHOWA DENKO KK) 11 Juillet 1984**
• **PATENT ABSTRACTS OF JAPAN vol. 8, no. 245
(P-312)10 Novembre 1984 & JP,A,59 117 729
(SHOWA DENKO KK) 7 Juillet 1984**

## Description

### Domaine technique

La présente invention a pour objet un composite hyperfréquence anisotrope.

Le composite de l'invention est soit absorbant, soit réfléchissant, selon ses conditions d'utilisation, c'est-à-dire selon l'orientation des composantes magnétique et/ou électrique de l'onde électromagnétique qu'il reçoit.

Le domaine technique de l'invention est celui des hyperfréquences, où le composite peut être utilisé dans des guides d'onde, en atmosphère libre, etc... par exemple dans des chambres anéchoïques, ou près d'une antenne pour modifier ses lobes d'émission.

### Etat de la technique antérieure

Le composite de l'invention appartient à la catégorie des composites utilisant un empilement de couches minces magnétiques.

Pour qu'un matériau magnétique permette de réaliser un absorbant, il est préférable qu'il ne soit pas conducteur, sinon il se comporterait comme un réflecteur parfait. Une première famille de matériaux magnétiques, les ferrites, satisfait d'emblée à ces conditions, et est largement utilisée.

La famille des matériaux ferromagnétiques est au contraire très conductrice. Pour réaliser un absorbant, il est alors classique de disperser un matériau ferromagnétique finement divisé (en poudre ou en paillettes le plus souvent) dans une matrice isolante. On peut alors obtenir un composite isolant et magnétique. Cependant, les niveaux de perméabilité relative μ que l'on obtient sont faibles (composante imaginaire μ" de l'ordre de quelques unités), nettement inférieurs au produit de la perméabilité intrinsèque de la charge multipliée par sa fraction volumique. C'est particulièrement vrai aux faibles taux de charge.

Tout cela concourt à donner des matériaux lourds, épais, avec une forte proportion volumique de charge magnétique, ce qui nuit à leurs qualités mécaniques et à leur tenue à l'environnement.

En outre, les techniques de fabrication des poudres magnétiques ne permettent généralement pas un bon contrôle de la composition et des propriétés cristallines, lesquelles conditionnent les propriétés magnétiques du matériau.

Selon d'autres modes de réalisation connus, les couches ferromagnétiques sont déposées sur un substrat mais sous forme fragmentée. Le document US-A-3,540,047 décrit par exemple un matériau constitué par des éléments (flocons, disques, copeaux) dispersés dans un matériau diélectrique. Chaque élément comprend un empilement de couches ferromagnétiques et de couches isolantes.

En plus des inconvénients déjà mentionnés, ces matériaux composites à couches minces ferromagnétiques présentent celui de mal dissiper la chaleur résultant de l'absorption.

La présente invention a justement pour but de remédier à ces inconvénients. A cette fin, elle propose un composite spécialement adapté à la dissipation thermique. En outre, ce composite est de bonne qualité mécanique et de large bande passante, (autour de fréquences d'accord allant d'une centaine de MégaHertz à plusieurs dizaines de GigaHertz). Par ailleurs, le composite de l'invention est de grande souplesse d'emploi puisqu'il peut être utilisé aussi bien comme matériau absorbant que comme matériau réfléchissant, selon ses conditions d'utilisation.

### Exposé de l'invention

L'invention utilise un empilement de couches alternativement ferromagnétiques et isolantes, qui ne travaillent plus en position longitudinale, (c'est-à-dire parallèlement à la surface sur laquelle elles sont déposées) comme dans l'art antérieur, mais en position transversale, c'est-à-dire perpendiculairement (ou sensiblement perpendiculairement) à ladite surface. En d'autres termes, les couches reçoivent l'onde électromagnétique à traiter sur la tranche. Le transfert de chaleur s'effectue le long des couches jusqu'au substrat, qui est en contact thermique avec la tranche des couches. Ce transfert est beaucoup plus efficace qu'avec des couches longitudinales.

De façon précise, l'invention a pour objet un composite hyperfréquence anisotrope comprenant un support sur lequel est déposé un empilement de couches minces alternativement ferromagnétiques et isolantes, ce composite étant caractérisé par le fait que l'empilement est formé de couches minces de composition continue disposées sensiblement perpendiculairement au support, ces couches ayant une tranche en contact avec le support et une tranche côté opposé au support, les tranches opposées au support définissant une surface libre apte à recevoir une onde électromagnétique, cette onde ayant une direction de propagation sensiblement parallèle aux couches, le composite étant soit absorbant si le champ magnétique de l'onde est parallèle aux couches, soit réfléchissant si le champ électrique est parallèle aux couches, ce composite étant caractérisé en outre par le fait que le support est conducteur de la chaleur, l'empilement de couches étant en contact thermique avec ce support.

De préférence, la fraction volumique de matériau ferromagnétique, par rapport à l'ensemble du composite ferromagnétique-isolant, est comprise entre 0,3% et 70%.

L'épaisseur du composite comptée dans le plan des couches est comprise entre 0,1e et 10e où e est donné par la formule :

$$e=c/(2\pi F_r\mu''_r)$$

où c est la vitesse de la lumière, $F_r$ la fréquence de résonance du matériau ferromagnétique, $\mu''_r$ la valeur de la composante imaginaire de la perméabilité magnétique relative du composite à cette fréquence.

De préférence, les couches ferromagnétiques présentent une épaisseur comprise entre une fraction de l'épaisseur de peau à la fréquence du champ électromagnétique et environ 10 fois cette épaisseur de peau.

L'invention ne se limite pas au cas où les couches ferromagnétiques sont constituées par un seul et même matériau. De façon plus générale, les couches ferromagnétiques et/ou isolantes peuvent être constituées de plusieurs matériaux différents.

Dans certains cas, il peut être intéressant d'utiliser des couches ferromagnétiques possédant un axe de facile aimantation dirigé dans le plan des couches.

Le phénomène physique sur lequel l'invention se fonde est l'absorption par résonance gyromagnétique dans un matériau ferromagnétique. Ce phénomène est connu et il est décrit notamment dans l'article de C. KITTEL intitulé "On the theory of Ferromagnetic Resonance Absorption", publié dans "Physical Review", 73, 155 (1948).

Par ailleurs, le matériau de l'invention est un matériau stratifié. Des travaux ont déjà été effectués sur la mesure de la perméabilité magnétique dans de tels milieux stratifiés. On pourra se reporter notamment à l'article de S.M. RYTOV intitulé "Electromagnetic Properties of a Finely Stratified Medium" publié dans Soviet Physics JETP, vol. 2, n°3, mai 1956, pp. 466-475.

Si l'épaisseur du matériau ferromagnétique est faible devant l'épaisseur de peau à la fréquence de travail, la perméabilité du ferromagnétique $\mu_f$ est liée à la perméabilité mesurée pour le composite, soit $\mu_m$, par la relation :

$$\mu_f=1+(\mu_m-1)/F$$

où F est le taux de charge en matériau ferromagnétique.

Si l'épaisseur de la couche ferromagnétique n'est plus négligeable devant l'épaisseur de peau, la relation est plus complexe et devient :

$$\mu_m=[(1-F)+F.C\mu_f]/[1+F(C-1)]$$

avec

$$C = \frac{tg(\pi N_f e_f/\lambda)}{\pi N_f e_f/\lambda}$$

où F désigne encore le taux de charge en ferromagnétique, et où $\lambda$ et la longueur d'onde, $e_f$ l'épaisseur de la couche ferromagnétique, $N_f$ l'indice du matériau ferromagnétique (égal à la racine carrée du produit de la permittivité électrique par la perméabilité à la fréquence considérée).

On peut résoudre numériquement cette relation pour trouver $\mu_f$ en fonction de la perméabilité mesurée $\mu_m$.

**Brève description des dessins**

- la figure 1 montre un composite selon l'invention disposé dans un guide d'onde rectangulaire,
- la figure 2 montre la structure du composite dans une variante à lamelles planes, travaillant soit en absorption, soit en réflexion,
- la figure 3a montre une orientation privilégiée du champ électromagnétique pour un fonctionnement en absorption, et la figure 3b une orientation privilégiée du champ électromagnétique pour un fonctionnement en réflexion,
- la figure 4 montre un ruban isolant recouvert d'une couche ferromagnétique interrompue, à partir duquel on peut réaliser le composite de l'invention,

- la figure 5 montre un composite à couches ferromagnétiques multiples,
- la figure 6 montre les variations de la composante imaginaire de la perméabilité du composite de l'invention pour trois matériaux différents,
- la figure 7 montre les variations correspondantes de la composante réelle,
- la figure 8 montre les variations du coefficient de réflexion d'un composite selon l'invention pour ces trois matériaux,
- la figure 9 montre un composite à couches ferromagnétiques à axe de facile aimantation, dirigé selon la largeur du ruban,
- la figure 10 illustre un mode de réalisation d'un écran absorbant à ailettes de refroidissement, et
- la figure 11 illustre une variante à couches métalliques.

## Exposé détaillé de modes de réalisation

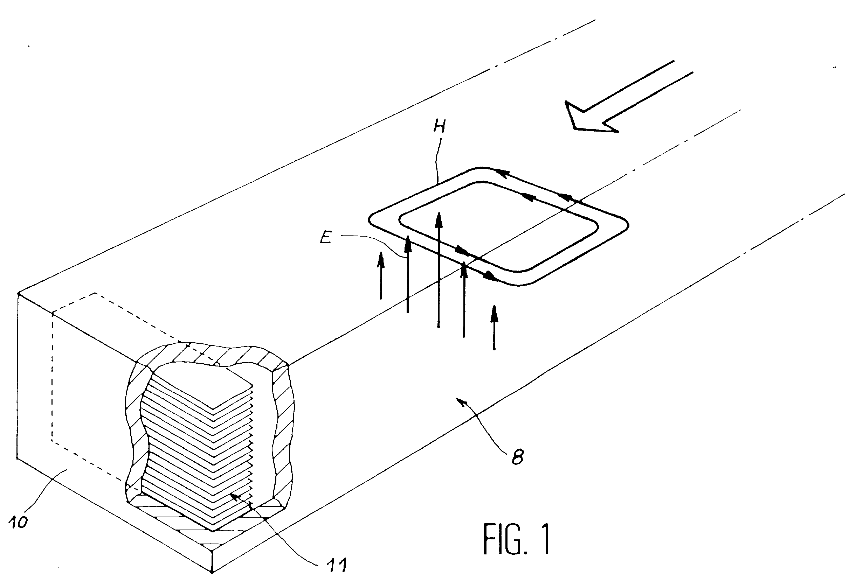

La figure 1 représente un guide d'onde 8 avec, sur le fond 10, un composite 11 conforme à l'invention. Dans le mode de propagation illustré, le champ électrique E est perpendiculaire au plan des couches ferromagnétiques et isolantes et le champ magnétique H est dans le plan des couches. Le composite est alors absorbant.

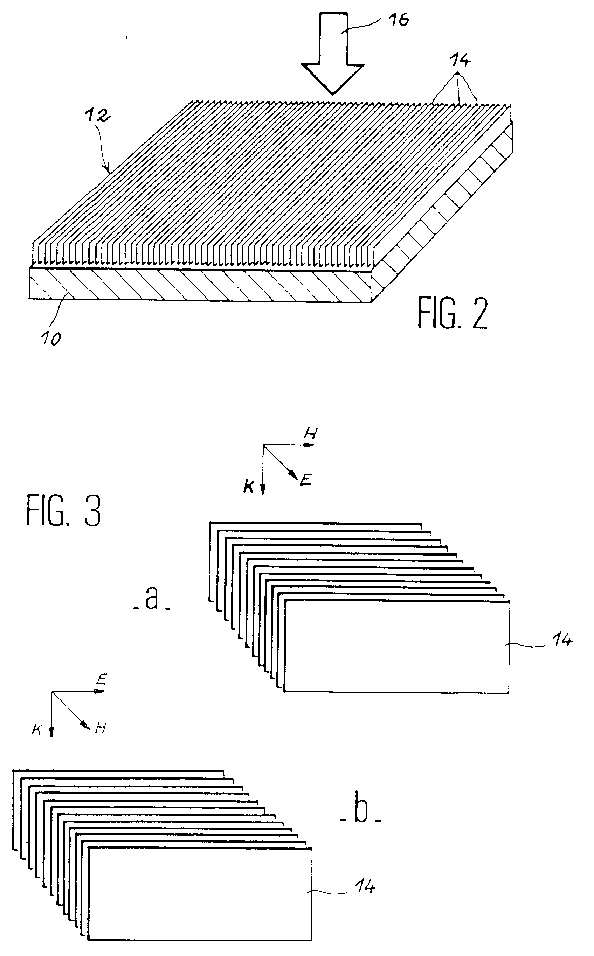

La figure 2 illustre de manière simplifiée et agrandie la structure du composite de l'invention. On retrouve un support 10 (qui correspond au fond du guide d'onde de la figure 1) et les couches ferromagnétiques 12 séparées par des couches isolantes 14. Le champ électromagnétique incident est référencé 16. L'incidence n'est pas nécessairement rigoureusement normale à la surface libre du composite.

Les figures 1a et 3b permettent de préciser les conditions dans lesquelles ce composite est absorbant ou réfléchissant.

Sur la figure 3a, la composante magnétique H du champ est parallèle aux couches ferromagnétiques. La composante électrique E est perpendiculaire à ces mêmes couches. Le vecteur de propagation référencé K est perpendiculaire à ces deux composantes. Le composite est absorbant.

Sur la figure 3b, c'est la composante électrique E qui est parallèle aux couches ferromagnétiques et le composite est réfléchissant.

La direction de propagation K n'est pas nécessairement rigoureusement perpendiculaire au substrat. Elle peut être inclinée.

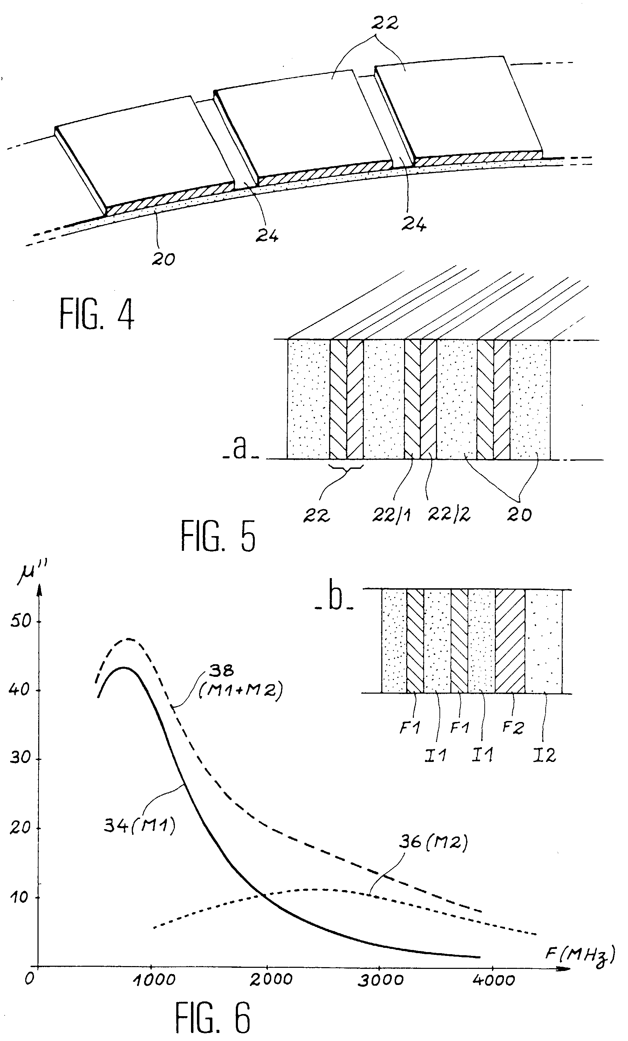

La figure 4 illustre un moyen de réalisation du composite de la figure 2. On part d'un film isolant 20, par exemple en Mylar (marque déposée) et l'on recouvre ce film d'une couche mince ferromagnétique 22, par exemple en CoNiZrMo et cela par tout moyen (pulvérisation magnétron, dépôt par canon à ions, dépôt par méthode chimique ou électrochimique). On choisit un matériau ferromagnétique dont la perméabilité intrinsèque est pratiquement nulle à la fréquence Fr à laquelle on souhaite obtenir l'absorption, avec un $\mu''$ important à cette fréquence. On choisira une épaisseur de la couche suffisante pour que la concentration volumique en ferromagnétique soit suffisante pour que la perméabilité $\mu''$ à la fréquence de résonance Fr soit voisine ou supérieure à la permittivité du composite.

Dans l'exemple de la figure 2, où l'on s'intéresse à un écran absorbant sous incidence normale, l'épaisseur du composite sera voisine de l'épaisseur $\underline{e}$ telle que :

$$e = c/(2.\pi.Fr.\mu''_r)$$

c étant la vitesse de la lumière, Fr la fréquence pour laquelle $\mu' = 0$.

On découpe ensuite le film obtenu pour obtenir un ruban. Ce ruban peut être découpé en lamelles de longueur déterminée et toutes ces lamelles peuvent être collées les unes sur les autres pour obtenir le composite lamellaire de la figure 2.

Pour éviter que d'éventuels court-circuits entre deux lamelles consécutives ne détériorent le composite sur toute sa largeur, il est utile de prévoir des coupures ou discontinuités dans la couche ferromagnétique. Ces discontinuités sont référencées 24 sur la figure 4. On peut les obtenir directement lors du dépôt de la couche ferromagnétique (par masquage), ou bien, après dépôt, en gravant le matériau ferromagnétique. On peut aussi étirer le film souple, de manière à craqueler le dépôt.

Il n'est pas nécessaire que ces discontinuités soient régulières. Il suffit que les longueurs de continuité scient toutes assez faibles. On veillera notamment à ce que la distance entre deux discontinuités reste nettement supérieure à l'épaisseur de la couche.

A titre d'exemple non limitatif, on peut s'y prendre comme suit. On réalise un dépôt au déroulé, d'un alliage ferromagnétique composé essentiellement de cobalt, et de 5 à 15% de niobium et de zirconium (CoNbZr), épais de 0,5 $\mu$m sur un film de Mylar (marque déposée) de 12 $\mu$m d'épaisseur. Le dépôt est réalisé sous champ magnétique, pour obtenir un axe de difficile aimantation homogène sur tout le film. Le matériau présente une fréquence de résonance Fr=1,5 GHz, une composante imaginaire de perméabilité $\mu''$ qui atteint un maximum de 800 à 1,5 GHz, pour la direction de difficile aimantation. On découpe des bandes dans cette direction, et on les empile de façon à obtenir une plaque où elles sont éclairées par la tranche. Si on utilise 2,5 $\mu$m de colle pour réaliser un tel assemblage, le taux volumique de ferromagnétique est de 3,33%. Le composite aura un $\mu'$ pratiquement nul à 1,5 GHz, et un $\mu''$ de 800x0,0333=26,7 à cette fréquence, pour H parallèle aux bandes. La permittivité reste égale à celle du Mylar, soit pratiquement 3. On a donc une perméabilité très supérieure à la permittivité, alors même que le taux de charge en ferromagnétique est très faible. Pour une épaisseur de 1,2 mm, la plaque de composite placée sur une plaque métallique absorbe un rayonnement électromagnétique à 1,5 GHz sous incidence normale et pour la polarisation parallèle aux couches. La masse surfacique est de 2 kg/cm$^2$, ce qui est 5 à 10 fois plus faible que la masse surfacique des absorbants isotropes résonnants disponibles dans le commerce, tout en étant moins épais. Dans cette masse surfacique, le ferromagnétique représente 0,32 kg/m$^2$ et la matrice le restant. En diminuant la quantité d'isolant (film de Mylar moins épais, de 3,5 $\mu$m par exemple), on peut diminuer la masse surfacique et l'épaisseur du revêtement, la quantité de ferromagnétique par unité de surface restant constante.

Le composite de l'invention n'est pas constitué nécessairement d'un seul matériau ferromagnétique. Il peut avantageusement en comprendre plusieurs comme représenté sur la figure 5. Sur la partie a, on voit que chaque couche ferromagnétique 22 est constituée de deux couches 22/1 et 22/2 accolées. Ces deux matériaux sont déposés successivement sur le même isolant 20, comme pour le cas représenté sur la figure 4. On peut aussi séparer les couches ferromagnétiques de natures différentes par des isolants comme représenté sur la partie b où F1 et F2 sont deux ferromagnétiques différents et I1, I2 deux isolants différents.

Grâce à l'utilisation de plusieurs matériaux et de plusieurs épaisseurs, on peut réaliser un composite ayant une perméabilité pour la polarisation privilégiée qu'il serait difficile ou impossible d'obtenir à partir d'un seul matériau. En utilisant plusieurs matériaux dont les fréquences de résonance sont un peu différentes, on peut ainsi obtenir un composite présentant une courbe de perméabilité beaucoup plus amortie. Plus la courbe est amortie, plus la largeur de bande de l'absorbant que l'on réalise est importante, mais plus la masse surfacique augmente. On peut encore élargir d'un facteur deux la bande passante en utilisant des épaisseurs de ferromagnétiques plus grandes, qui approchent ou dépassent d'un facteur 2 l'épaisseur de peau à la fréquence de résonance. Au-delà de ce facteur 2, il est pratiquement sans intérêt pour les propriétés électromagnétiques d'augmenter l'épaisseur de ferromagnétique.

On peut aussi utiliser plusieurs ferromagnétiques sur un même isolant, résonnant à des fréquences différentes, avec des fractions volumiques adaptées pour réaliser un écran résonant à 2, voire 3 fréquences différentes.

La figure 6 montre ainsi les variations de le composante imaginaire $\mu''$ de la perméabilité magnétique cour plusieurs matériaux. La courbe 34 correspond à un matériau M1 comprenant un isolant et 6% d'un matériau ferromagnétique F1 alors que la courbe 36 correspond à un matériau M2 comprenant le même isolant et 9% d'un matériau ferromagnétique F2. La courbe 38 correspond à un matériau composite avec une couche du même isolant, une couche ferromagnétique F1 à 6% et une couche ferromagnétique F2 à 9%.

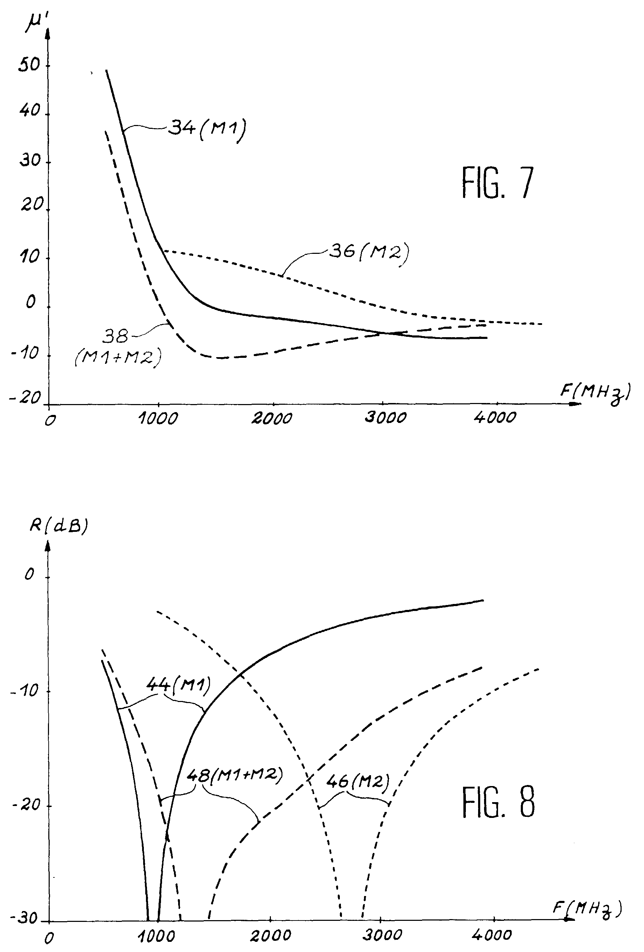

La figure 7 montre les variations correspondantes de la composante réelle $\mu'$.

La figure 8 montre la variation du coefficient de réflexion d'un composite pour les trois matériaux en question. La courbe 44 correspond au matériau M1, la courbe 46 au matériau M2 et la courbe 48 aux deux matériaux M1, M2 superposés.

Pour le matériau M1 (courbe 44), l'épaisseur du composite était de 1,28 mm ; pour le matériau M2 (courbe 46), l'épaisseur était de 1,6 mm ; et pour le matériau composite M1+M2 elle était de 1,1 mm.

Pour toutes ces mesures, les matériaux étaient les suivants :

ferromagnétique F1 :     alliage ferromagnétique amorphe, épais de 1 $\mu$m, $Co_{87}Nb_{11,5}Zr_{1,5}$ (atomes %), déposé sur du Mylar,

ferromagnétique F2 :     alliage ferromagnétique microcristallisé, $Co_{83}Fe_{6,7}Si_{1,3}B_9$ (atomes %), épaisseur de la couche 1 $\mu$m, déposé sur un substrat en polyéthylène,

isolant :     les couches sont collées l'une sur l'autre avec de la colle Araldite (marque déposée) standard.

Pour que le matériau ferromagnétique puisse être l'objet d'une atténuation par le mécanisme gyromagnétique déjà mentionné, il faut que les couches minces ferromagnétiques aient leur axe de facile aimantation perpendiculaire à la direction du champ magnétique hyperfréquence, ou du moins sensiblement perpendiculaire à cette direction. La géométrie lamellaire proposée est en général favorable à ce que l'axe de facile aimantation soit dans le plan du film. Cependant, il se pourrait (cela dépend du matériau) que la direction de l'aimantation locale des films ferromagnétiques s'éloigne de cet axe de facile aimantation, sous l'effet de la forme macroscopique du composite par exemple.

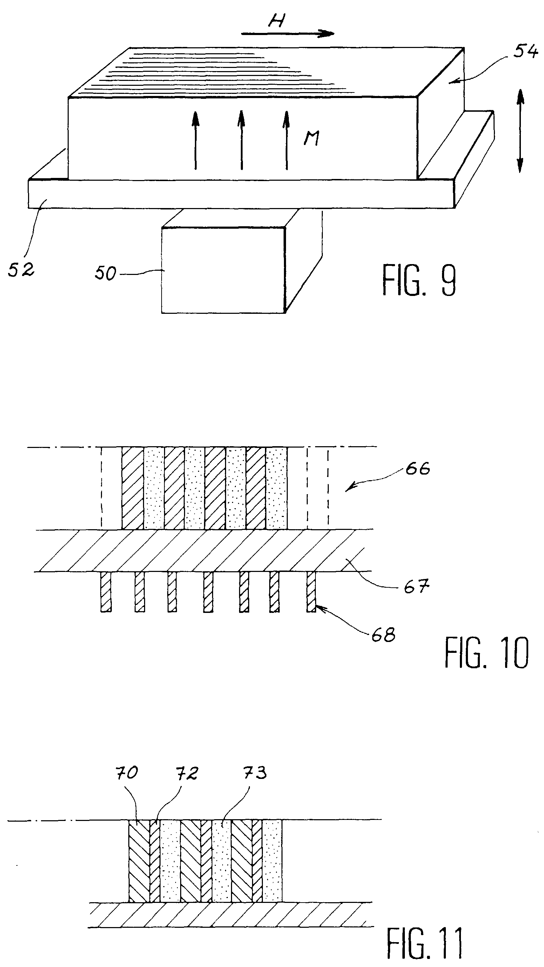

Pour maintenir l'aimantation locale dans la plan de la couche ferromagnétique et perpendiculaire au champ H de la polarisation privilégiée, il est possible d'avoir recours à des aimants. Dans le cas où les couches ferromagnétique-isolant sont perpendiculaires à un support, on pourra placer les aimants sous le support, de façon à ce que les lignes de champ des aimants soient normales au support, et dans le plan des couches. Le champ créé par les aimants doit être assez intense pour que l'aimantation soit normale à la surface. C'est ce qui est représenté sur la figure 9 où l'on voit un aimant 50 disposé sous un support 52 recouvert d'un composite lamellaire 54.

On pourra utiliser également un empilement de couches ferromagnétiques dont l'une au moins possède des propriétés magnétiques dures, et présente une aimantation persistante dans le plan de la couche, cette orientation étant orientée perpendiculairement à la direction de la polarisation privilégiée. Grâce à cette propriété, les couches voisines peuvent être aimantées dans la même direction. Ce peut donc être le cas dans la structure de la figure 5 où l'une des couches ferromagnétiques 22/1 ou 22/2 est une couche dure.

On peut encore utiliser une (ou des ) couche(s) ferromagnétique(s) dure(s) avec un champ coercitif supérieur au champ démagnétisant, qui résulte de la forme générale du composite, le matériau étant aimanté perpendiculairement à la direction du champ H de la polarisation privilégiée.

Il est particulièrement commode d'utiliser, pour réaliser de telles couches à axe de facile aimantation, un procédé dit de dépôt magnétron. Les magnétrons de type "planar" ont, en leur voisinage, un champ magnétique qui est orienté parallèlement à la cible, et normal à l'axe du magnétron. Ce n'est pas vrai sur toute la surface du magnétron, et notamment sur les bords, mais sur une bonne partie de la surface.

On peut réaliser des dépôts "au déroulé", qui consistent à faire casser un film souple devant le magnétron en l'enroulant continûment. Or, le champ magnétique du magnétron se révèle capable d'aligner l'axe de facile aimantation du dépôt dans sa direction. Cela permet d'obtenir un dépôt dont la direction de facile aimantation est connue et constante. C'est un avantage appréciable pour la réalisation du composite anisotrope, car cette direction joue un grand rôle.

Le dépôt sera plus homogène si l'on entraîne le film perpendiculairement à l'axe du magnétron. L'axe de facile aimantation sera alors dans la direction de défilement du film.

Selon un aspect de l'invention, le composite est plus spécialement adapté à l'absorption de fortes puissances hyperfréquences. Dans ce cas, il faut que l'absorbant évacue suffisamment bien la chaleur produite par l'absorption, pour ne pas se dégrader. Le composite selon l'invention est caractérisé par son aptitude à évacuer la chaleur. En effet, le matériau ferromagnétique est un bon conducteur de la chaleur, et le composite transportera très bien la chaleur parallèlement aux plans conducteurs.

Lorsque le composite est placé sur une plaque métallique (comme exposé précédemment), aussi bien en espace libre que dans un guide d'onde (sur la fond du guide et/ou sur les parois), les ondes arrivant sur la surface libre produisent de la chaleur qui sera rapidement conduite sur la plaque support métallique. Des techniques classiques permettront d'évacuer la chaleur de la plaque support (radiateur à ailettes, fluide, refroidisseur, etc...).

On voit ainsi sur la figure 10 un composite 66 porté par un support métallique 67 muni à sa partie inférieure d'ailettes de refroidissement 68.

Pour augmenter la conductivité thermique du composite le long de son épaisseur, une variante de l'invention consiste à utiliser des couches minces ferromagnétiques plus épaisses que ne le nécessitent les propriétés hyperfréquences (par exemple, dépassant 3 fois l'épaisseur de peau).

Une autre variante consiste à utiliser des dépôts de ferromagnétiques sur un bon conducteur thermique (cuivre par exemple), lui-même éventuellement déposé sur un film souple isolant.

C'est ce qui est représenté sur la figure 11, où l'on voit un composite formé d'un empilement de couches respectivement ferromagnétique 70, métallique 72 (par exemple en cuivre) et isolante 73.

## Revendications

1. Composite hyperfréquence anisotrope comprenant un support (10, 52, 67) sur lequel est déposé un empilement de couches minces alternativement ferromagnétiques (12, 22, F1, F2, 70, 72) et isolantes (14, 20, I1, I2, 73), ce composite étant caractérisé par le fait que l'empilement est formé de couches minces de composition continue disposées sensiblement perpendiculairement au support, ces couches ayant une tranche en contact avec la support et une tranche côté opposé au support, les tranches opposées au support définissant une surface libre apte à recevoir une onde électromagnétique, cette onde ayant une direction de propagation (K) sensiblement parallèle aux couches, le composite étant soit absorbant si le champ magnétique (H) de l'onde est parallèle aux couches, soit réfléchissant si la champ électrique (E) est parallèle aux couches, ce composite étant caractérisé en outre par le fait que le support (10, 52, 67) est conducteur de la chaleur, l'empilement de couches étant en contact thermique avec ce support.

2. Composite selon la revendication 1, dans lequel le support est métallique.

3. Composite selon la revendication 1, dans lequel l'empilement comprend en outre des couches minces métalliques (72) au contact avec les couches minces ferromagnétiques (70).

4. Composite selon la revendication 1, dans lequel les couches minces ferromagnétiques (22) sont constituées d'au moins deux matériaux ferromagnétiques différents (22/1, 22/2).

5. Composite selon la revendication 4, dans lequel les deux matériaux ferromagnétiques différents (F1, F2) sont séparés par des isolants (I1, I2).

6. Composite selon la revendication 1, dans lequel les couches minces ferromagnétiques possèdent un axe de facile aimantation perpendiculaire au support (52).

7. Composite selon la revendication 1, dans lequel chaque couche ferromagnétique (22) est constituée d'au moins deux matériaux ferromagnétiques (22/1, 22/2) dont l'un est un matériau possédant un axe de facile aimantation dirigé perpendiculairement au support (52).

8. Composite selon la revendication 1, dans lequel la fraction volumique de matériau ferromagnétique, par rapport à l'ensemble du composite, est comprise entre 0,3% et 70%.

9. Composite selon l'une quelconque des revendications précédentes, dans lequel l'épaisseur du composite dans le plan des couches est comprise entre 0,1e et 10e où e est donné par la formule :

$$e = c/2\pi F_r \mu''_r$$

où c est la vitesse de la lumière, $F_r$ la fréquence de résonance du matériau ferromagnétique et $\mu''_r$ la valeur de la composante imaginaire de la perméabilité magnétique relative du composite à cette fréquence ($F_r$).

**Patentansprüche**

1. Anisotroper Verbundstoff, einen Träger (10, 52, 67) umfassend, auf dem ein Stapel Dünnschichten abgeschieden ist, abwechselnd ferromagnetisch (12, 22, F1, F2, 70, 72) und isolierend (14, 20, I1, I2, 73), wobei dieser Verbundstoff
**dadurch gekennzeichnet** ist, daß der Stapel durch zum Träger im wesentlichen senkrechte Dünnschichten kontinuierlicher Zusammensetzung gebildet wird, wobei ein Rand dieser Schichten mit dem Träger in Kontakt ist und ein Rand sich auf der vom Träger abgewandten Seite befindet und die vom Träger abgewandten Ränder eine freie Fläche definieren, die eine elektromagnetische Welle empfangen kann, wobei diese Welle eine zu den Schichten im wesentlichen parallele Ausbreitungsrichtung (K) hat, der Verbundstoff entweder absorbierend ist, wenn das Magnetfeld (H) der Welle parallel zu den Schichten ist, oder reflektierend, wenn das elektrische Feld (E) parallel zu den Schichten ist, und dieser Verbundstoff außerdem dadurch gekennzeichnet ist, daß der Träger (10, 52, 67) wärmeleitend ist, wobei der Schichtenstapel thermischen Kontakt mit diesem Träger hat.

2. Verbundstoff nach Anspruch 1, bei dem der Träger metallisch ist.

3. Verbundstoff nach Anspruch 1, bei dem der Stapel außerdem metallische Dünnschichten (72) in Konakt mit den ferromagnetischen Dünnschichten (70) umfaßt.

4. Verbundstoff nach Anspruch 1, bei dem die ferromagnetischen Dünnschichten (22) durch wenigstens zwei unterschiedliche ferromagnetische Materialen (22/1, 22/2) gebildet werden.

5. Verbundstoff nach Anspruch 4, bei dem die beiden unterschiedlichen ferromagnetischen Materialien (F1, F2) durch Isolatoren (I1, I2) getrennt werden.

6. Verbundstoff nach Anspruch 1, bei dem die ferromagnetischen Dünnschichten eine zu dem Träger (52) senkrechte Achse leichter Magnetisierung besitzen.

7. Verbundstoff nach Anspruch 1, bei dem jede ferromagnetische Schicht (22) durch wenigstens zwei ferromagnetische Materialien (22/1, 22/2) gebildet wird, von denen das eine ein Material mit einer senkrecht zum Träger (52) ausgerichteten Achse leichter Magnetisierung ist.

8. Verbundstoff nach Anspruch 1, bei dem der Volumenanteil des ferromagnetischen Materials in bezug auf den ganzen Verbundstoff zwischen 0,3% und 70% enthalten ist.

9. Verbundstoff nach einem der vorangehenden Ansprüche, bei dem die Dicke des Verbundstoffs in der Ebene der Schichten enthalten ist zwischen 0,Ie und 10e, wobei e sich ergibt aus der Formel

$$e = c/2\pi F_r \mu''_r$$

mit c als Lichtgeschwindigkeit, $F_r$ als Resonanzfrequenz des ferromagnetischen Materials und $\mu''_r$ als Wert der imaginären Komponente der relativen magnetischen Permeabilität des Verbundstoffs bei dieser Frequenz ($F_r$).

## Claims

1. Anisotropic microwave composite comprising a support (10, 52, 67) on which is deposited a stack of thin, alternatively ferromagnetic (12, 22, Fl, F2, 70, 72) and insulating (14, 20, I1, I2, 73) layers, said composite being characterized in that the stack is formed by thin layers having a continuous composition arranged substantially perpendicularly to the support, said layers having an edge in contact with the support and an edge on the side opposite to the support, the edges opposite to the support defining a free surface able to receive an electromagnetic wave, said wave having a propagation direction (K) substantially parallel to the layers, the composite being either absorbing if the magnetic field (H) of the wave is parallel to the layers, or reflecting if the electric field (E) is parallel to the layers, said composite also being characterized in that the support (10, 52, 67) is heat conducting, the stack of layers being in thermal contact with said support.

2. Composite according to claim 1, wherein the support is metallic.

3. Composite according to claim 1, wherein the stack also comprises thin metal layers (72) in contact with the thin ferromagnetic layers (70).

4. Composite according to claim 1, wherein the thin ferromagnetic layers (22) are made from at least two different ferromagnetic materials (21/1, 22/2).

5. Composite according to claim 4, wherein the two different ferromagnetic materials (Fl, F2) are separated by insulants (I1, I2).

6. Composite according to claim 1, wherein the thin ferromagnetic layers have an easy magnetization axis perpendicular to the support (52).

7. Composite according to claim 1, wherein each ferromagnetic layer (22) is formed from at least two ferromagnetic materials (22/1, 22/2), whereof one is a material having an easy magnetization axis directed perpendicular to the support (52).

8. Composite according to claim 1, wherein the ferromagnetic material volume fraction, relative to the complete composite, is between 0.3% and 70%.

9. Composite according to any one of the preceding claims, wherein the thickness of the composite in the plane of the layers is between 0.Ie and 10e, where e is given by the formula:

$$e = c/2\pi F_r \mu''_r$$

where c is the speed of light, $F_r$ the resonant frequency of the ferromagnetic material and $\mu''_r$ the value of the imaginary component of the relative magnetic permeability of the composite at said frequency ($F_r$).

FIG. 1

FIG. 2

FIG. 3

_a_

_b_

FIG. 4

_a_

22    22/1  22/2    20

FIG. 5

_b_

F1  F1  F2

I1  I1  I2

FIG. 6

FIG. 7

FIG. 8

FIG. 9

FIG. 10

FIG. 11